# EUROPEAN PATENT APPLICATION

(11) **EP 2 532 277 A1**
(43) Date of publication of application: **12.12.2012**
(21) Application number: 11169409.7
(22) Date of filing: 10.06.2011
(51) Int. Cl.: A47C 17/80, B60P 3/39, B62D 33/06

(54) **Pivotable support system with flexible mounting**

(71) Applicant: Stjernfjädrar AB, 524 21 Herrljunga (SE)
(72) Inventor: Edling, Kenneth, 524 31 HERRLJUNGA (SE); Larsson, Jonas, 441 43 ALINGSÅS (SE)
(74) Representative: Lind, Urban Arvid Oskar

(57) **Abstract**

A system for supporting individuals or objects within a vehicle, and in particular within truck cabs, is disclosed. The system comprises a support structure (2) having an upper support surface and a pivot mechanism (4) connected to a fixed part of said vehicle and to said support structure so as to enable the support structure to pivot around a pivot axis (PA) to move between a stored position and a deployed position. The pivot mechanism (4) comprises at least one strip of elastic material (41) arranged to be elastically stretched during pivoting of said support structure (2) from the deployed position to the stored position, thereby moving the pivot axis (PA) away from said fixed part, and to be elastically contracted during pivoting of said support structure (2) from the stored position to the deployed position, thereby moving the pivot axis (PA) towards said fixed part. Hereby, a cost-efficient, safe and space efficient solution is obtained.
The present invention also relates to a vehicle comprising such a support system, and to a corresponding method.

## Description

### Field of the invention

The present invention relates to a system for supporting individuals or objects within a vehicle, as well as a vehicle comprising such a supporting system.

### Background of the invention

ln various vehicles, especially in trucks and/or commercial vehicles, there is often a need to provide one or more sleeping area within the vehicle. By way of example, vehicles can often include one or more sleeper bunks or berths upon which one member of a driving team can rest while the other operates the vehicle, or which allows both members of the team to rest when parking the vehicle in a suitable rest area or stop. The cabs of lorries and trucks often include a sleeping area behind the driver and passenger chairs. One or more beds are placed above or alongside each other in the sleeping area. The beds are often arranged in the sleeping area in such a way that they can be folded up against a wall, so that the sleeping area can be used for other purposes, for example for storing freight. Since the sleeping area often has a limited floor surface, it is of utmost importance that the available space is used efficiently.

A problem with foldable bunks in vehicle cabs is that, owing to the limited inside height of a vehicle cab, they are often fastened to the vehicle cab by complicated hinge systems comprising many parts to make it possible to raise and lower the bunk in order to provide a foldable bunk of sufficient width while at the same time ensuring that the distance between any lower bunk and a foldable bunk is not too small when the bunks are in their position of use. Said hinge systems and their fastenings in the vehicle cab also need to be very strong to prevent the upper bunk from becoming detached from the vehicle cab in a collision.

Examples of such pivotable bunks in vehicles are known from e.g. EP 1 532 038, US 7 735 904 and WO 2008/073026.

While a variety of sleeper bunk or berth devices and systems are known, there is a continued need for improved devices and systems.

It is therefore an object of the present invention to provide a system for supporting individuals or objects within a vehicle which takes up little space and which and which is relatively simple and cost-efficient.

### Summary of the invention

It is therefore an object of the present invention to at least partly overcome these problems, and to provide an improved system for supporting individuals or objects within a vehicle.

These, and other objects that will be apparent from the following, are achieved by a system for supporting individuals or objects within a vehicle, and a vehicle comprising such a system for supporting individuals or objects, according to the appended claims.

According to a first aspect of the invention there is provided a system for supporting individuals or objects within a vehicle, comprising:
a support structure having an upper support surface; and
a pivot mechanism connected to a fixed part of said vehicle and to said support structure so as to enable said support structure to pivot around a pivot axis to move between a stored position and a deployed position;
wherein the pivot mechanism comprises at least one strip of elastic material arranged to be elastically stretched during pivoting of said support structure from the deployed position to the stored position, thereby moving the pivot axis away from said fixed part, and to be elastically contracted during pivoting of said support structure from the stored position to the deployed position, thereby moving the pivot axis towards said fixed part.

Hereby, a cost-efficient system is achieved, using relatively simple and cost-efficient means for providing the pivot mechanism. Further, the pivot mechanism maintains the support structure close to the fixed part of the vehicle, such as a rear wall, at all times, which provides very good space utilization, and also provides a comfortable support for the user/object, without any unutilized space between the wall and the supporting surface. Still further, the new pivot mechanism makes the support structure easy to mount and dismount.

In the context of the present application, "support structure" is to be construed broadly, generally indicating any structure forming a curved or flat plane which may function as a support surface. The support structure is preferably rectangular, but may have other shapes as well. Further, the support structure preferably forms a flat, non-curved plane, but slightly curved planes are also feasible. For example, when used as a bed, the support structure may form a curved plane with lower central regions and raised regions along some or all of the sides. Further, the support structure is preferably self-supporting, and preferably comprises at least one layer or frame of rigid material. In case the support structure is intended e.g. to support goods, the support structure may be entirely made of a rigid material, whereas in case the support structure is intended as a bed or bunk, the support structure may additionally comprise a layer of flexible and/or resilient material, such as a mattress. However, the support structure need not be self-supporting, and may comprise only one or several layers of flexible and/or resilient material. For example, the support structure may comprise only a mattress, which in a loaded position is to be supported by additional support means. The additional support means may be fixed and stationary within the vehicle. Preferably, the at least one strip of elastic material is arranged to maintain the support structure in abutment with the fixed part of the vehicle both in the stored position and the deployed position.

The connection between the pivot mechanism and the support structure is preferably arranged at a distance of at least 2 cm from a side of the support structure being closest to the pivot mechanism, and preferably at least 5 cm from said side of the support structure, and most preferably at least 10 cm from said side of the support structure. Hereby, the strip of elastic material has a relatively long extension also in the relaxed, un-stretched position, which makes the strip simpler and more cost-efficient to produce.

The strip(s) of elastic material may comprise a homogeneous material arranged in a single layer, or comprise two or more layers. In case different materials are used in the layers, the layers may have different degrees of elasticity and breaking strength.

The strip(s) of elastic material preferably has a breaking strength comparable to the breaking strength of conventional seat belts. Preferably, the strip(s) of elastic material has a breaking strength of at least 10 kN, and preferably at least 15 kN, as tested in accordance with the specification in Standard No. 209 Seat belt assemblies (FMVSS 209) issued by the US National Highway Traffic Safety Administration (NHTSA). Hereby, the support structure will be held in place at all times, and unintended detachment is obtained even in collisions and the like.

In a preferred embodiment, the at least one strip of elastic material comprises a first layer of a non-elastic material and a second layer of elastic material, the first and second layers being non-continuously connected to each other in a direction perpendicular to the pivot axis. The length of the first layer in the direction perpendicular to the pivot axis preferably is longer than or at least corresponds to a length of the second layer in the same direction when the second layer is stretched to the maximum stretching that will occur during pivoting. Hereby, the first layer can be made of a strong material with a high tensile breaking strength, such as the material conventionally used for seat safety belts, whereas the second layer may be an elastic but less strong material. By separating these requirements, and providing the required breaking strength to a first material and the required elasticity to a second material, a very cost-efficient elastic strip is obtained. Connection between the first and second layer can e.g. be obtained by welding, sewing, adhering by adhesive, or the like. The first and second layers are preferably connected to each other along a plurality of connecting lines extending essentially parallel to the pivot axis. However, it is also feasible to attach the layers to each other only at the connections to the fixed part and the support structure, respectively.

However, in some types of vehicles, there will be no specific need for a high breaking strength, and in such applications, there will be no specific requirements for a high breaking strength. Further, even in cases where there is a requirement for a high breaking strength, due to e.g. safety reasons, it is also possible to obtain the high breaking strength by means of other measures, not directly related to the elastic strip. For example, such high breaking strength may be obtained by separately arranged straps of a strong material, such as a belt strap, by means of a wire or chain of metal, such as steel or the like, etc.

The strip of elastic material may be only one strip, extending along part of the support structure, or along the entire support structure. However, preferably the pivot mechanism comprises at least two strips of elastic material, said at least two strips being arranged at separate positions along said pivot axis.

The support structure preferably comprises a mattress with an upper and lower side, the upper side forming said support surface, wherein the pivot mechanism is connected to the support structure at or adjacent to the lower side of the mattress. Additionally or alternatively, the support structure preferably comprises a structure base and a mattress supported by said structure base, wherein the pivot mechanism is connected to the structure base, and preferably connected to the side of the structure base facing the mattress. By means of such a low connection of the pivot mechanism to the structure, very efficient space utilization is obtained, since the support structure in the stored position will obtain a lower height. Further, arrangement of the pivot mechanism between the support structure and the mattress will make the pivot mechanism less visible, thereby providing smoother surfaces etc.

The mattress may e.g. comprise a resilient material, such as foam rubber or the like. However, preferably the mattress comprises coil springs, and most preferably coil springs arranged in separate pockets of a cover material, a so-called pocket spring mattress.

The connection between the pivot mechanism and the fixed part of the vehicle is preferably formed by a releasable locking arrangement. For example, the releasable locking arrangement may comprise conventional buckets. Hereby, mounting and dismounting of the support structure becomes simple.

The support structure further preferably comprises pins extending in the direction of the pivot axis and protruding out from two opposite sides of the support structure, said pins being receivable by a fixed guiding arrangement of the vehicle, thereby defining the path of movement for the pivot axis during pivoting. These pins extend along the pivot axis, and are consequently moved along with the pivot axis. By using such pins in combination with a fixed guiding arrangement, e.g. arranged on the adjacent walls of a truck cab, the movement of the support structure becomes more controlled.

During movement of said support structure between said deployed and stored positions, a side of said support structure being opposite to said pivot axis preferably follows a substantially arcuate path. In order to obtain an even better controlled movement of the support structure, it is also possible to arrange pins extending parallel to the pivot axis and protruding out from two opposite sides of the support structure at a distance from the pivot axis, e.g. at the forward part of the support structure, being opposite to the pivot axis. These pins can be received by a fixed guiding arrangement of the vehicle, defining or corresponding to said substantially arcuate path.

The support structure may be used in various ways, such as being a shelf or a seat portion of a chair or a couch. However, preferably the support structure is a sleeper bunk. Most preferably, the vehicle is a truck and the sleeper bunk is supported within a cab of the truck. The sleeper bunk is preferably connected to the rear wall of the vehicle cab. The sleeper bunk is preferably arranged in an upper portion of the vehicle cab, and the system may further comprise a further bunk arranged in the lower portion of the vehicle cab, wherein the sleeper bunk in the upper portion of the vehicle cab preferably is arranged above said further bunk.

The support structure is preferably essentially horizontal in the deployed position. The support structure is further preferably essentially vertical in the stored position. Pivoting between the deployed position and the stored position preferably results in a rotation over approximately 90 degrees.

The support structure is preferably basically rectangular, hence having two long sides and two short sides. Further, the support structure is preferably connected to the fixed part, such as a wall of the vehicle, at one of the long sides of the support structure, so that said long side forms or is adjacent to the pivot axis. However, connection of the support structure to the fixed part at one of the short sides instead would also be feasible.

A locking device is preferably provided to lock the support structure in at least one of the storage position and the deployed position, and possibly at both said positions.

According to another aspect of the invention, there is provided a vehicle comprising a system for supporting individuals or objects as defined above.

According to still another aspect of the invention there is provided a method for supporting individuals or objects within a vehicle, comprising:
providing a support structure having an upper surface to support at least one individual or object; and
providing a pivot mechanism connected to a fixed part of said vehicle and to said support structure so as to enable said support structure to pivot around a pivot axis to move between a stored position and a deployed position;
wherein the pivot mechanism comprises at least one strip of elastic material arranged to be elastically stretched during pivoting of said support structure from the deployed position to the stored position, thereby moving the pivot axis away from said fixed part, and to be elastically contracted during pivoting of said support structure from the stored position to the deployed position, thereby moving the pivot axis towards said fixed part.

The support structure is preferably a sleeper bunk and said vehicle is preferably a truck, wherein the method further includes the step of locating said sleeper bunk within a cab of said truck.

By means of these additional aspects of the invention, similar objects and advantages as discussed above in relation to the first aspect of the invention are obtainable.

### Brief description of the drawings

These and other aspects of the present invention will now be described in more detail, with reference to the appended drawings showing a currently preferred embodiment of the invention.
Figs. 1a-1b are schematic partially sectional perspective views of a truck cab illustrating an overhead sleeper bunk in accordance with an embodiment of the invention, shown in a deployed position and a stored position, respectively.
Fig. 2 is a schematic partially sectional perspective view of the sleeper bunk of Fig. 1 in more detail.
Figs. 3a-3c are schematic side views, partially sectional, of the sleeper bunk in Fig. 2, illustrating a deployed position, an intermediate position and a stored position, respectively.
Fig. 4 is a schematic view of an alternative connection arrangement to be used in a system according to the invention.
Fig. 5 is an exploded schematic view of the elastic strip of Figs. 2 and 3.
Fig. 6 is a schematic view of additional guiding means which may optionally be used in combination with the embodiment illustrated in Fig. 1.

### Detailed description

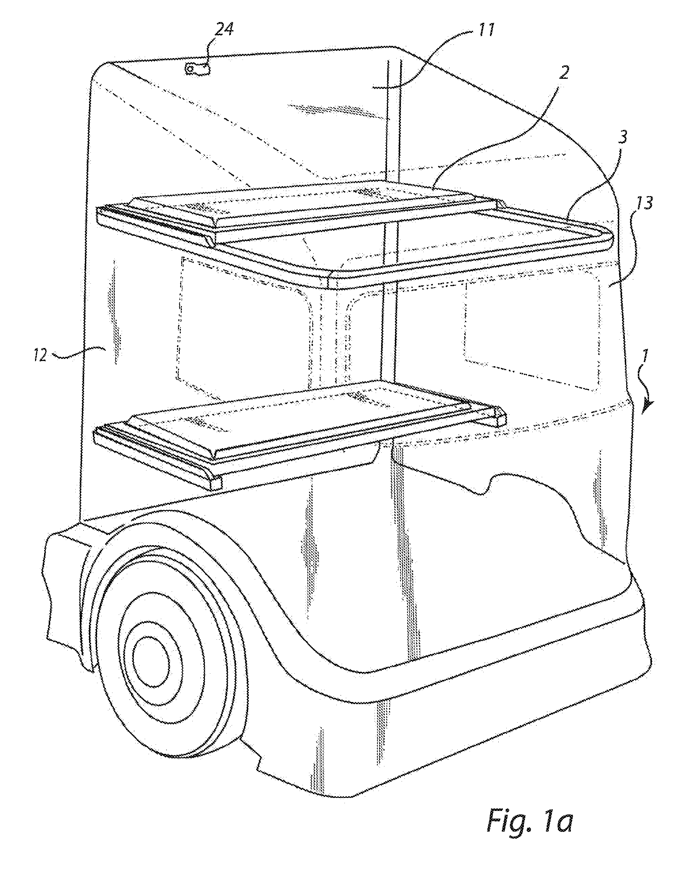

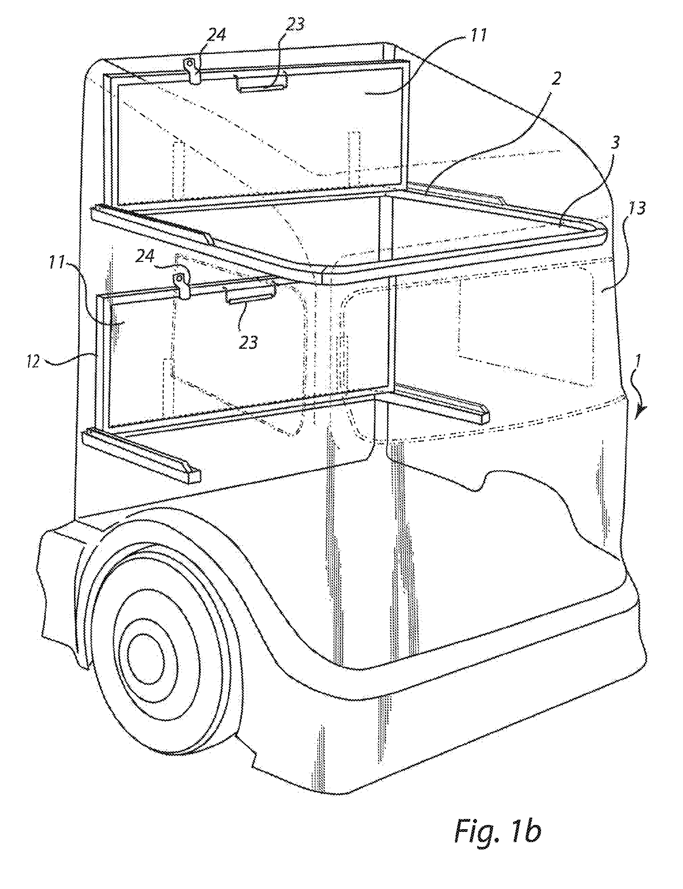

With reference to Figs. 1-3, a system for supporting individuals or objects within a vehicle according to a currently preferred embodiment of the present invention will now be described. This embodiment relates to a support structure in the form of a sleeper bunk arranged in a truck cab. However, as discussed above, the supporting structure may also be used to other ends, such as being used as a shelf for storing cargo and other objects, or being used as a seat or a couch for sitting. Further, the system may also be used in other types of vehicles, such as trains, boats, caravans, trailers, campers, etc. Accordingly, even though the following detailed example is related to a sleeper bunk in a truck cab, it is to be acknowledged by the skilled reader that this is merely intended as a non-limiting example.

With reference to Fig. 1, a truck cab 1 comprises two pivotable support structures 2, which are pivotable between a lowered or deployed position, as illustrated in Fig. 1a, and a substantially raised or stored position, as illustrated in Fig. 1b. The support structures here form sleeper bunks, whereby one sleeper bunk is arranged as an upper sleeper bunk, arranged in an upper part of the cab, and one sleeper bunk is arranged as a lower sleeper bunk, arranged in a lower part of the cab. Even though the illustrative example provides two pivotable sleeper bunks, it is naturally also possible to have only one sleeper bunk in the cab, either in an upper or a lower part of the cab, or to provide three or more sleeper bunks, Further, in case several sleeper bunks are provided, not all need to be pivotable, or to be pivotable by means of the pivotable connection disclosed in more detail in the following. The following detailed description focuses on the arrangements related to one support structure or sleeper bunk, and primarily the upper sleeper bunk, but the arrangements of further support structures, such as the lower sleeper bunk, may be similar or identical to the arrangements of the upper sleeper bunk.

The support structure is pivotably connected to a fixed part of the truck cab, and in the illustrated example to the rear wall 11. Thereby, the pivoting occurs around a pivot line at or proximate a rear side of the bunk so as to be readily pivoted between the raised position and the deployed position. In the deployed position, the support structure is further supported by a fixed support structure 3. The fixed support structure here takes the form of beams extending out from the side walls 12, 13 of the truck cab. The support structure forms an upwardly facing surface on which a part of the support structure at a distance from the pivot line. In the illustrated example, the support structure 3 supports the entire side edges of the support structure. However, other forms of support structures, such as flanges, ridges and the like extending out from the side walls 12, 13 are also feasible. It would also be feasible e.g. to arrange pins or the like protruding from the support structure which may run in channels or the like in the side wall, thereby forming a support for the support structure in the deployed position. Still further, the support structure may comprise straps or the like, forming a fixed connection between the forward end of the support structure and a fixed part of the truck cab, such as the truck cab roof or the rear wall 11.

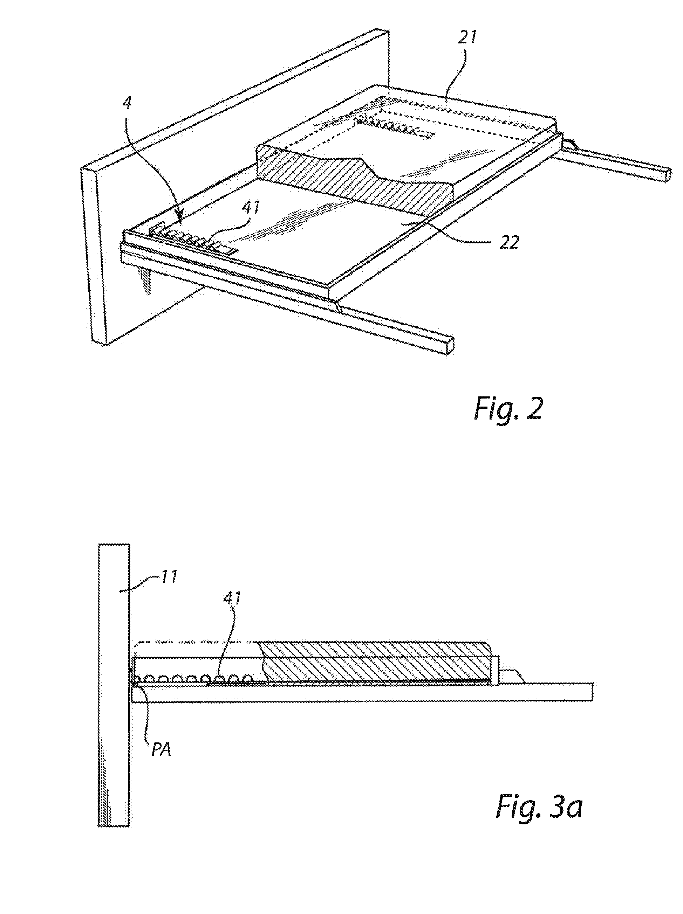

The support structure or sleeper bunk 2 may take various forms. Preferably, the bunk/structure includes a generally rectangular planar top surface. In the simplest configuration, the support structure is merely a plate. However, preferably the top surface provides a cushioned, resilient, pliant and/or otherwise comfortable surface for an individual to repose or sleep thereon. The length of the bunk is preferably more than 1.8 meters long, preferably longer, and is preferably at least 0.6 meter wide, so as to accommodate most individuals. In some embodiments, the bunk is made with a substantially rectangular frame, such as e.g. a metal frame, which has a semi-flexible fabric material stretched there-around, such as e.g. a canvas material and/or other suitable material, so as to provide a cot-type of bunk. However, preferably the bunk includes a mattress 21, having common mattress materials, such as e.g. cushioning and/or other materials, along with a suitable base or frame 22 to provide sufficient support and rigidity, as shown in Fig. 2. The mattress may e.g. comprise a resilient material, such as foam rubber or the like. However, preferably the mattress comprises coil springs, and most preferably coil springs arranged in separate pockets of a cover material, a so-called pocket spring mattress. Any appropriate bunk construction can be employed depending on circumstances as would be appreciated by those in the art based on this disclosure. If a mattress core of sufficient rigidity is used, the mattress may also be used without any frame or base.

In order to facilitate manual positioning of the bunk between raised (or stored) and lowered (or deployed) positions, one or more handle(s) 23 can be provided. The handle(s) can include a hand grip, a recess, an extension, a fabric member, at least one strap(s) and/or the like. The bunk preferably also includes a retaining mechanism (not shown), such as a belt or strap which may be connected to a buckle at the forward end of the bunk. The retaining mechanism can include a netting and/or a plurality of cross-straps or belts configured so as to provide a restraining shield along a side of the bunk, such as, e.g., to help maintain a person or object on the bunk. In some embodiments, the retaining mechanism can be fixed to the wall and/or ceiling of the vehicle in a variety of ways. Such retaining mechanisms are per se well-known, and will not be discussed any further.

A locking device 24 is preferably provided to lock the support structure in at least one of the storage position and the deployed position, and possibly at both said positions.

The pivotable connection between the support structure 2 and the fixed part of the vehicle, in the illustrative example the rear wall 11, is provided by a pivot mechanism 4 comprising at least one strip 41 of elastic material. In the illustrated example, two strips 41 of elastic material are used, each having a limited width extension. However, alternatively, the strip of elastic material may be only one strip, extending along part of the support structure, or along the entire support structure. It is further possible to use more than two strips of elastic material.

The connection 42 between the pivot mechanism and the support structure can e.g. be obtained by means of a bolt arrangement. However, other methods of connecting the at least one strip 41 to the support structure are naturally feasible. The connection 42 is preferably arranged at a distance from the rearward side of the support structure, i.e. the side of the support structure being closest to the pivot line, and preferably at least 5 cm from said side of the support structure, and most preferably at least 10 cm from said side of the support structure.

The pivot mechanism is preferably arranged beneath the lower side of the mattress, and most preferably between the support structure and the mattress. However, it is also possible to arrange the pivot mechanism beneath the support structure, or on other suitable locations.

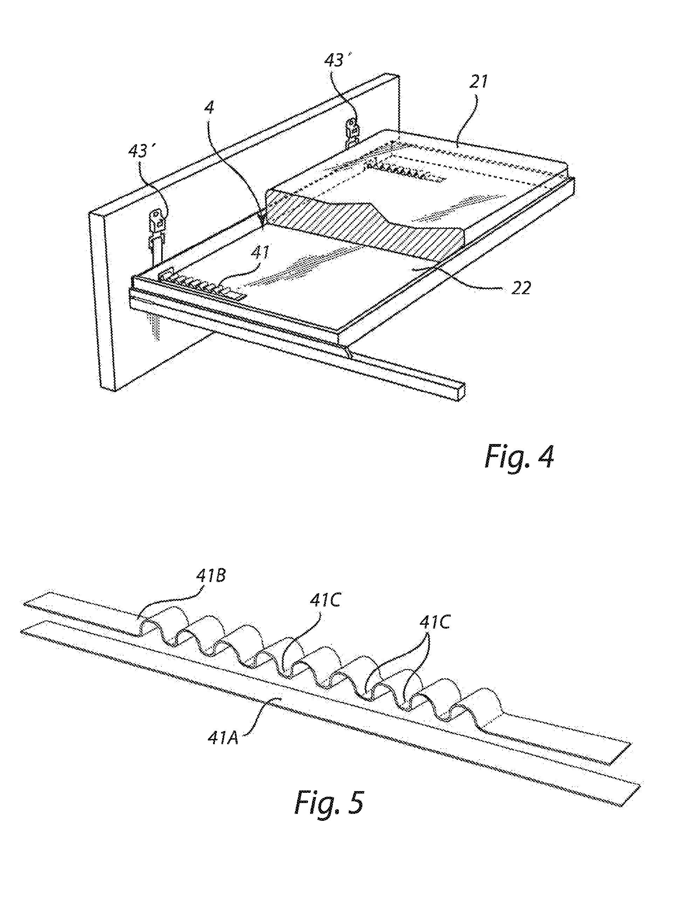

The connection 43 between the pivot mechanism and the fixed part of the vehicle may also be provided by means of a bolt arrangement. However, preferably this connection is formed by a releasable locking arrangement. For example, the releasable locking arrangement 43' may comprise conventional buckets, as is illustrated schematically in Fig. 4. Hereby, mounting and dismounting of the support structure becomes simple.

The releasable locking arrangement 43' is in Fig. 4 illustrated to be arranged above the upper surface of the support structure and the mattress arranged thereon. However, it is also feasible to arrange the releasable locking arrangement 43' closer to the pivot line, which will make the pivoting action more stable. Further, in the illustrative example of Fig. 4, the releasable locking arrangements 43' are connected to the outer surface of the wall to which the support structure is pivotably connected, thereby extending out from the wall. However, it is also possible to integrate the releasable locking arrangement in the wall, thereby having less extension or no extension at all out from the wall surface.

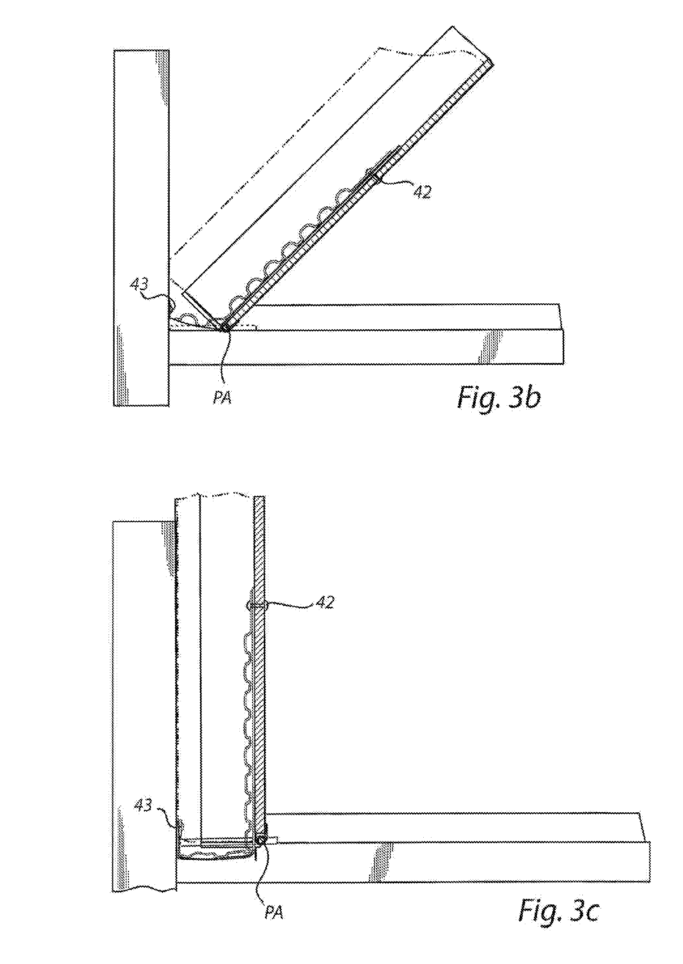

The pivot mechanism enables the support structure to pivot around a pivot axis or pivot line PA to move between the stored position and the deployed position. The at least one strip of elastic material is arranged to be elastically stretched during pivoting of the support structure from the deployed position to the stored position, thereby moving the pivot axis away from the fixed part (rear wall), and to be elastically contracted during pivoting of said support structure from the stored position to the deployed position, thereby moving the pivot axis towards the fixed part (rear wall). This is schematically illustrated in Figs. 3a-c. Fig. 3a illustrates the support structure in the deployed position, where the pivot axis PA is close to the rear wall 11, and the strip 41 is in a relatively relaxed condition. Fig. 3b illustrates an intermediate position, where the support structure is in a position between the deployed and stored position. In this position, the pivot axis PA has moved away from the rear wall, and the strip 41 has become stretched, thereby exerting a force to pull the support structure towards the rear wall. Fig. 3c illustrates the support structure in the stored position, where the pivot axis PA has moved further away from the rear wall, and the strip 41 has become further stretched. Consequently, the pivot mechanism maintains the support structure close to, and preferably in abutment with, the fixed part (rear wall) of the vehicle at all times.

The strip(s) of elastic material may comprise a homogeneous material arranged in a single layer, or comprise two or more layers. In case different materials are used in the layers, the layers may have different degrees of elasticity and breaking strength. The strip(s) of elastic material preferably has a breaking strength comparable to the breaking strength of conventional seat belts.

In a preferred embodiment, the at least one strip of elastic material comprises a first layer 41 A of a non-elastic material and a second layer 41 B of elastic material, as illustrated in Fig. 5. The first and second layers are preferably non-continuously connected to each other in a direction perpendicular to the pivot axis, e.g. by means of connecting lines 41 C extending essentially parallel to the pivot axis. Connection between the first and second layer can e.g. be obtained by welding, sewing, adhering by adhesive, or the like. However, it is also feasible to attach the layers to each other only at the connections to the fixed part and the support structure, respectively. The length of the first layer 41 A in the direction perpendicular to the pivot axis preferably is longer than or at least corresponds to a length of the second layer 41 B in the same direction when the second layer is stretched to the maximum stretching that will occur during pivoting. Hereby, the first layer can be made of a strong material with a high tensile breaking strength, whereas the second layer may be an elastic but less strong material.

However, in some types of vehicles, there will be no specific need for a high breaking strength, and in such applications, there will be no specific requirements for a high breaking strength. Further, even in cases where there is a requirement for a high breaking strength, due to e.g. safety reasons, it is also possible to obtain the high breaking strength by means of other measures, not directly related to the elastic strip. For example, such high breaking strength may be obtained by separately arranged straps of a strong material, such as a belt strap, by means of a wire or chain of metal, such as steel or the like, or other strong materials, etc.

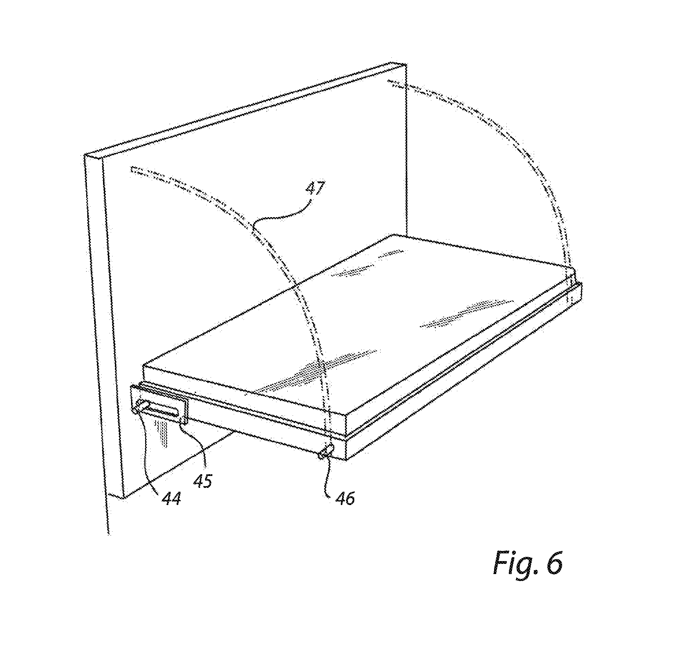

In order to obtain an even further controlled pivoting movement, it is possible to provide a guide structure. An example of such a guide structure is shown in Fig. 6, and involves pins 44 extending essentially in the direction of the pivot axis and protruding out from two opposite sides of the support structure. These pins are received by and guided in a guiding arrangement 45, such as a channel, arranged in or connected to the corresponding side walls of the vehicle, or in guiding arrangements connected to the frame 3. Since the pins extend along the pivot axis, they are consequently moved along with the pivot axis. Hereby, the path of movement for the pivot axis during pivoting is restricted to movement within said guiding arrangement, which provides a better control of the movement.

Additionally or alternatively, it is also possible to provide similar guide structures located separate from the pivot axis. An example of such an arrangement is also shown in Fig. 6, and involves pins 46 extending parallel to the pivot axis and protruding out from two opposite sides of the support structure at a distance from the pivot axis. In the shown example, these pins are provided at the forward part of the support structure, being opposite to the pivot axis. These pins are received by a fixed guiding arrangement 47 of the vehicle, e.g. arranged in or connected to the side wall of the vehicle, thereby defining a substantially arcuate path, which corresponds to the arcuate path followed by the support structure during movement between the deployed and stored positions.

The person skilled in the art realizes that the present invention by no means is limited to the preferred embodiments described above. On the contrary, many modifications and variations are possible within the scope of the appended claims. For instance, alternative embodiments of flexible pivot mechanisms are feasible, the support structure and optional mattress may be structured and configured in various ways, etc. Also, the system may be used in other applications other than the illustrated truck cab, and for other purposes than sleeping, such as for sitting, or storing goods and other objects.

## Claims

1. A system for supporting individuals or objects within a vehicle, comprising:
a support structure having an upper support surface; and
a pivot mechanism connected to a fixed part of said vehicle and to said support structure so as to enable said support structure to pivot around a pivot axis to move between a stored position and a deployed position;
wherein the pivot mechanism comprises at least one strip of elastic material arranged to be elastically stretched during pivoting of said support structure from the deployed position to the stored position, thereby moving the pivot axis away from said fixed part, and to be elastically contracted during pivoting of said support structure from the stored position to the deployed position, thereby moving the pivot axis towards said fixed part.

2. The system of claim 1, wherein the at least one strip of elastic material is arranged to maintain the support structure in abutment with the fixed part of the vehicle both in the stored position and the deployed position.

3. The system of claim 1 or 2, wherein the connection between the pivot mechanism and the support structure is arranged at a distance of at least 2 cm from a side of the support structure being closest to the pivot mechanism, and preferably at least 5 cm from said side of the support structure, and most preferably at least 10 cm from said side of the support structure.

4. The system of any one of the preceding claims, wherein the at least one strip of elastic material comprises a first layer of a non-elastic material and a second layer of elastic material, the first and second layers being non-continuously connected to each other in a direction perpendicular to the pivot axis.

5. The system of claim 4, wherein the first and second layers are connected to each other along a plurality of connecting lines extending essentially parallel to the pivot axis.

6. The system of any one of the preceding claims, wherein the pivot mechanism comprises at least two strips of elastic material, said at least two strips being arranged at separate positions along said pivot axis.

7. The system of any one of the preceding claims, wherein the support structure comprises a mattress with an upper and lower side, the upper side forming said support surface, wherein the pivot mechanism is connected to the support structure at or adjacent to the lower side of the mattress.

8. The system of any one of the preceding claims, wherein the support structure comprises a structure base and a mattress supported by said structure base, wherein the pivot mechanism is connected to the structure base, and preferably connected to the side of the structure base facing the mattress.

9. The system of any one of the preceding claims, wherein the connection between the pivot mechanism and the fixed part of the vehicle is formed by a releasable locking arrangement.

10. The system of any one of the preceding claims, wherein the support structure further comprises pins extending in the direction of the pivot axis and protruding out from two opposite sides of the support structure, said pins being receivable by a fixed guiding arrangement of the vehicle, thereby defining the path of movement for the pivot axis during pivoting.

11. The system of any one of the preceding claims, wherein during movement of said support structure between said deployed and stored positions, a side of said support structure being opposite to said pivot axis follows a substantially arcuate path.

12. The system of any one of the preceding claims, wherein said support structure is a sleeper bunk.

13. The system of claim 12, wherein said vehicle is a truck and the sleeper bunk is supported within a cab of the truck.

14. A vehicle comprising a system for supporting individuals or objects according to any one of the preceding claims.

15. A method for supporting individuals or objects within a vehicle, comprising:
providing a support structure having an upper surface to support at least one individual or object; and
providing a pivot mechanism connected to a fixed part of said vehicle and to said support structure so as to enable said support structure to pivot around a pivot axis to move between a stored position and a deployed position;
wherein the pivot mechanism comprises at least one strip of elastic material arranged to be elastically stretched during pivoting of said support structure from the deployed position to the stored position, thereby moving the pivot axis away from said fixed part, and to be elastically contracted during pivoting of said support structure from the stored position to the deployed position, thereby moving the pivot axis towards said fixed part.

16. The method of claim 15, wherein said support structure is a sleeper bunk and said vehicle is a truck, and further including the step of locating said sleeper bunk within a cab of said truck.
